Europäisches Patentamt

European Patent Office

Office européen des brevets

(11) Veröffentlichungsnummer: **0 293 623**

**A2**

(12) # EUROPÄISCHE PATENTANMELDUNG

(21) Anmeldenummer: 88107224.3

(22) Anmeldetag: 05.05.88

(51) Int. Cl.⁴: **B60T 11/16**

(30) Priorität: 04.06.87 DE 3718712

(43) Veröffentlichungstag der Anmeldung:
07.12.88 Patentblatt 88/49

(84) Benannte Vertragsstaaten:
**AT DE FR GB SE**

(71) Anmelder: **ROBERT BOSCH GMBH**
**Postfach 50**
**D-7000 Stuttgart 1(DE)**

(72) Erfinder: **Kehl, Georg**
**Taläckerstrasse 61**
**D-7000 Stuttgart 40(DE)**
Erfinder: **Siegel, Heinz, Ing. grad.**
**Hohenloher Strasse 86**
**D-7000 Stuttgart 40(DE)**

(54) **Bremsanlage.**

(57) Bei einer Bremsanlage, beispielsweise für Kraftfahrzeuge, besteht ein Hauptbremszylinder aus einem Gehäuse mit zumindest einer Gehäusebohrung, in welcher zumindest ein von einem Kolben veränderbarer Arbeitsraum ausgebildet ist. Dieser Arbeitsraum steht einerseits mit Radbremszylindern od. dgl. und andererseits über ein beim Bremsdruckaufbau verschließbares Zentralventil mit einer Rückführleitung zu einem Vorratsbehälter für Bremsflüssigkeit in Verbindung. Dabei soll das Zentralventil von einem jenseits des Kolbens in der Gehäusebohrung angeordneten Hülsenfortsatz mit Axialbohrung als Teil der Rückführleitung, einer diesen Hülsenfortsatz umfangenden und mit einer äußeren Dichtlippe der Innenwand der Gehäusebohrung anliegenden Manschette sowie einer mit dem Hülsenfortsatz zusammenwirkenden Stirnbohrung in einer Stirnfläche 80 eines von der Bewegung des Kolbens abhängenden Schiebers gebildet sein.

Fig.1

EP 0 293 623 A2

**Bremsanlage**

Stand der Technik

Die Erfindung betrifft eine Bremsanlage, beispielsweise für Kraftfahrzeuge, gemäß Gattung des Hauptanspruches.

Derartige Bremsanlagen sind in vielfältiger Form bekannt, wobei die Unterschiede insbesondere das Zentralventil betreffen. In einigen Fällen ist dieses Zentralventil als Nadelventil (siehe DE-OS 35 02 018) ausgebildet, in anderen Fällen werden Schließglieder auf oder in eine Öffnung zur Rückführleitung gepreßt (siehe beispielsweise US-PS 3 885 391). Diese Ventilarten gestatten jedoch nicht ein sogenanntes "Nachschnüffeln", d. h. ein Ansaugen von Bremsflüssigkeit aus der Rückführleitung vor bzw. während des Öffnens des eigentlichen Zentralventils. Durch das Nachschnüffeln soll vermieden werden, daß bei schnellem Lösen des Bremspedals im Bremskreis kurzzeitig Unterdruck entsteht und Luft in den Bremskreis gelangt.

Ein weiterer Problemkreis stellt die Dichthaltung der Kolbenführung dar, da der Kolben selbst mit so geringer Reibung wie möglich geführt werden soll.

Weiterhin ist darauf zu achten, daß sowohl das Zentralventil wie auch die Führung des Kolbens und dessen Zusammenwirken mit dem Zentralventil so einfach wie möglich ausgestaltet sein soll, um die Anzahl der Einzelteile und damit die Möglichkeiten des Verschleißes zu vermindern.

Vorteile der Erfindung

Die Bremsanlage mit den Merkmalen des Hauptanspruches hat den Vorteil, daß das Zentralventil nur aus wenigen, aber genau aufeinander abgestimmten Einzelteilen besteht. Bei geöffnetem Ventil ist der Rückfluß der Bremsflüssigkeit aus dem Arbeitsraum zum Vorratsbehälter durch den Zwischenraum zwischen der Stirnbohrung und dem Hülsenfortsatz hindurch gewährleistet. Dabei kann die Verbindung zwischen Arbeitsraum und Axialbohrung zur Rückführleitung durch einfache Längsnuten auf dem Umfang des Hülsenfortsatzes hergestellt sein. Dies bedeutet, daß der Hülsenfortsatz mit den zwischen den Längsnuten stehen bleibenden Rippen in der Stirnbohrung des Schiebers gleitet und dort geführt ist.

Selbstverständlich ist es auch möglich, anstelle der Längsnuten bzw. Rippen den Teil des Hülsenfortsatzes, der in der Stirnbohrung gleitet, querschnittlich als ein Dreieck, Vierkant oder Vieleck auszubilden. Dies stellt jedoch im Grunde lediglich eine Abwandlung des Gedankens der Anordnung von Längsnuten dar.

Eine andere Möglichkeit der Verbindung zwischen Arbeitsraum und Axialbohrung besteht in der Anordnung von Radialbohrungen in dem Hülsenfortsatz, welche von dem Schieber mit der Stirnbohrung bei dessen Bewegen verschlossen werden können.

Die eigentliche Abdichtung gegenüber dem Arbeitsraum übernimmt eine innere Dichtlippe, welche aus der Manschette gegen die Stirnfläche des Schiebers abragt. Beim Auftreffen der Stirnfläche des Schiebers auf diese innere Dichtlippe wird diese gegen die Stirnfläche gepreßt. Dabei ist erfindungsgemäß vorgesehen, daß die innere Dichtlippe einen dem Hülsenfortsatz angeformten Bund übergreift, der dann gleichzeitig als Anschlag für die Stirnfläche des Schiebers dient.

Würde die Verbindung zwischen Axialbohrung und Arbeitsraum sofort im Anschluß an den Bund hergestellt werden, bestünde die Gefahr, daß beim Öffnen des Zentralventils, d.h. beim Abheben der Stirnfläche des Schiebers von der inneren Dichtlippe, diese in den entstehenden Spalt einwandern würde. Dieser mögliche Nachteil wird durch einen zylindrischen Bereich zwischen Bund und den Längsnuten bzw. den oben beschriebenen anderen möglichen Verbindungen zwischen Arbeitsraum und Axialbohrung vermieden, wobei dieser zylindrische Bereich einen Außendurchmesser hat, der etwa dem Innendurchmesser der Stirnbohrung entspricht.

Der Hülsenfortsatz ist im vorliegenden Ausführungsbeispiel einstückig mit einer Scheibe verbunden, welche radial von einer Querbohrung von der Axialbohrung nach außen durchzogen ist. Diese Querbohrung mündet in einen Ringkanal, welcher zwischen dem Scheibenumfang und der Innenwand der Gehäusebohrung gebildet ist. An den Ringkanal schließt dann die Auslaßbohrung zum Vorratsbehälter für Bremsflüssigkeit an.

Ein weiterer Teil des Scheibenumfanges ist jedoch nahe an die Innenwand der Gehäusebohrung herangeführt, wobei lediglich noch ein geringer Ringspalt offen bleibt. Dieser Ringspalt wird von der äußeren Dichtlippe der Manschette überdeckt, wobei diese Dichtlippe so ausgebildet ist, daß sie bei Entstehen eines kurzzeitigen Vakuums im Arbeitsraum über den Ringspalt Bremsflüssigkeit aus der Rückführleitung bzw. dem Ringkanal nachschnüffeln kann.

Damit der oben beschriebene Ringspalt auch eingehalten werden kann, ist die Scheibe mit einer Ringhülse in eine Sacklochbohrung in den Boden der Gehäusebohrung eingesetzt und dort durch eine in die Ringhülse eingepreßte Kugel festgelegt.

Da der Schieber lediglich zum Verschließen des Zentralventils dient, muß er unabhängig von einer weiteren Bewegung des Kolbens beim Aufbau des Bremsdruckes sein. Deshalb wird er axial verschiebbar in einer Zylinderbohrung in dem Kolben geführt, wobei er in dieser Zylinderbohrung mit einem Bund gleitet. Der Ausgang der Zylinderbohrung ist von einem Sprengring belegt, welcher von dem Bund des Schiebers nicht überwunden werden kann. Damit ist der Schieber gegen ein Herausgleiten aus der Zylinderbohrung gesichert. Im übrigen stützt sich der Schieber über eine Schraubenfeder gegen den Boden der Zylinderbohrung oder einen Zentrierstift in der Zylinderbohrung ab. Sobald die Stirnfläche des Schiebers auf den von der inneren Dichtlippe übergriffenen Bund aufgetroffen ist, bleibt der Schieber in dieser Stellung, während der Kolben seine Arbeit fortsetzen kann. Bei der Rückführung des Kolbens infolge nachlassenden Bremsdruckes wird bei Auftreten eines Unterdruckes Bremsflüssigkeit über den Ringspalt bzw. die äußere Dichtlippe nachgeschnüffelt, bis der Sprengring an dem Bund des Schiebers anschlägt und die Stirnfläche von der inneren Dichtlippe abhebt.

Der Kolben selbst wird in einer Führungshülse geführt und von nur einem Dichtring abgedichtet. Damit ist die Bewegung des Kolbens sehr reibungsarm, so daß nur eine geringe Anfangskraft bei Beginn des Aufbaus des Bremsdruckes erforderlich ist. So wird auch die Hysterese gering gehalten.

Um dennoch möglicherweise auftretende Leckagen beseitigen zu können, sind nach dem Dichtring Abstreifer vorgesehen. Ein derartiger Abstreifer kann aus einer weiteren Führungsbuchse bestehen, welche Abstreifkanten aufweist. Mit einer entsprechenden zum Dichtring hin gewandten Abstreifkante erfolgt ein Abstreifen von Leckflüssigkeit beim Rückhub des Kolbens. Trotzdem durch die Führungsbuchse gelangende Bremsflüssigkeit wird an einer hinteren Abstreifkante der Führungsbuchse bei einem erneuten Bremshub abgestreift. Damit dies nicht etwa außerhalb eines die Gehäusebohrung verschließenden und vom Kolben durchsetzten Deckels geschieht, ist der Kolben unter Ausbildung eines Ringraumes zum Deckel hin durch diesen geführt.

Die abgestreifte Leckflüssigkeit wird dann einem Abfluß zugeleitet.

In einem anderen Ausführungsbeispiel der Erfindung stützt sich gegen den Deckel ein Abstreifring entgegen dem Rückhub des Kolbens ab, wobei hier der Abstreifring relativ eng den Kolben umfaßt, so daß die Reibung wieder erhöht ist. Diese Anordnung hat allerdings den Vorteil, daß fast die gesamte Leckflüssigkeit von dem Abstreifring vom Kolben abgenommen wird. Auch hier sind entsprechende Verbindungen zu einem Abfluß für die Leckflüssigkeit vorgesehen.

Insgesamt kommt die vorliegende Bremsanlage mit nur sehr wenigen Einzelteilen aus, welche in vorbestimmter Weise zusammenarbeiten.

Zeichnung

Die Erfindung wird nachfolgend anhand der Zeichnungen näher erläutert. Es zeigen:

Figur 1 einen Längsschnitt durch einen Teil eines Hauptbremszylinders;

Figur 2 einen Längsschnitt durch ein weiteres Ausführungsbeispiel eines teilweise dargestellten Hauptbremszylinders entsprechend Figur 1.

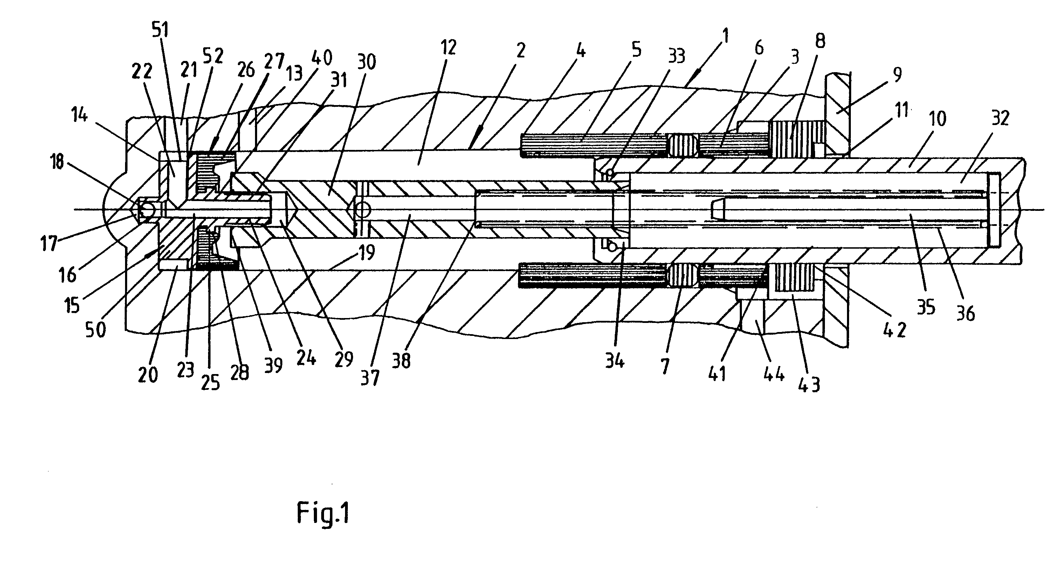

Gemäß Figur 1 weist ein teilweise dargestelltes Gehäuse 1 eines Hauptbremszylinders eine sacklochartige Gehäusebohrung 2 auf, welche sich unter Ausbildung von zwei Stufen 3 und 4 nach innen verjüngt.

An der Stufe 4 schlägt eine Führungshülse 5 an. Zwischen dieser Führungshülse 5 und einem Stützring 6 ist ein O-Ring als Dichtring 7 angeordnet. Auf dem Stützring 6 sitzt eine Führungsbuchse 8 auf, welche an einem Deckel 9 anschlägt.

Den Deckel 9 durchsetzt ein Kolben 10, welcher, nicht dargestellt, mit einem Bremspedal verbunden ist. Dabei wird zwischen Kolben 10 und Deckel 9 ein Ringraum 11 ausgebildet.

Im Inneren der Gehäusebohrung 2 ist der Kolben 10 durch die Führungsbuchse 8 und die Führungshülse 5 geführt, wobei der Dichtring 7 die Verhinderung von Leckagen aus einem Arbeitsraum 12 übernimmt. In diesem Arbeitsraum 12 kann eine Bremsflüssigkeit durch den Kolben 10 unter Druck gesetzt und durch eine Radialbohrung 13 zu entsprechenden, ebenfalls nicht dargestellten Radbremszylindern geleitet werden.

Andernends der Stufe 4 schlägt an einen Boden 14 der Gehäusebohrung 2 ein - scheibenförmiger Teil 50 einer Buchse 15 an, welche mit einer angeformten Ringhülse 16 in eine Sacklochbohrung 17 im Boden 14 eingreift und dort durch eine eingepreßte Kugel 18 axial gehalten ist. Mit der Innenwand 19 der Gehäusebohrung 2 bildet die Scheibe 50 umfangseitig einen Ringspalt 52 sowie einen Ringkanal 20, in welchen eine Auslaßbohrung 21 einmündet, welche mit einem nicht näher dargestellten Vorratsbehälter für Bremsflüssigkeit in Verbindung steht.

Andererseits führt von dem Ringkanal 20 zum Buchseninneren eine Querbohrung 22, welche in eine Axialbohrung 23 umgelenkt wird. Dabei durchbohrt die Axialbohrung 23 auch einen der Buchse 15 angeformten Hülsenfortsatz 24, bevor sie aus der Buchse 15 ausmündet.

Der Hülsenfortsatz 24 weist einen Bund 25 auf, der mit der Buchse 15 eine Manschette 26 einklemmt. Diese Manschette 26 besitzt eine äußere Dichtlippe 27 und eine innere Dichtlippe 28. Dabei liegt die äußere Dichtlippe 27 der Innenwand 19 der Gehäusebohrung 2 an. Die innere Dichtlippe 28 übergreift den Bund 25.

Der Hülsenfortsatz 24 greift nach dem Bund 25 in eine Stirnbohrung 29 eines Schiebers 30 ein, wobei der Hülsenfortsatz 24 Längsnuten 31 besitzt. In der in Figur 1 gezeigten Ruhelage des Ventils steht der Arbeitsraum 12 über diese Längsnuten 31, die Stirnbohrung 29, die Axialbohrung 23, die Querbohrung 22, den Ringkanal 20 und die Auslaßbohrung 21 mit dem Vorratsbehälter für Bremsflüssigkeit in Verbindung. Dabei bilden der Schieber 30 im Zusammenwirken mit der Manschette 26 und dem Hülsenfortsatz 24 ein weiter unten beschriebenes Zentralventil.

Andernends der Stirnbohrung 29 sitzt der Schieber 30 in einer Zylinderbohrung 32 des Kolbens 10. Dort ist er über einen Sprengring 33, welcher an einen Bund 34 anschlägt, gegen ein Herausgleiten gesichert. In der Zylinderbohrung 32 wird durch einen Zentrierstift 35 eine Schraubenfeder 36 gehalten, welche in eine Längsbohrung 37 in dem Schieber 30 eingreift und sich dort gegen eine Bohrungsschulter 38 abstützt.

Die Arbeitsweise des Bremszylinders ist folgende:

Zum Bremsdruckaufbau wird der Kolben 10 über das nicht näher dargestellte Bremspedal nach links verschoben. Unter dem Druck der Schraubenfeder 36 folgt der Schieber 30 dieser Bewegung nach. Dabei nimmt die Stirnbohrung 29 den Hülsenfortsatz 24 auf, wobei der Schieber 30 im ersten Teil seiner Bewegung die Längsnuten 31 überfährt. Kurz vor dem Auftreffen der Stirnfläche 39 des Schiebers 30 auf der inneren Dichtlippe 28 der Manschette 26 überfährt der Schieber 30 mit dem vorderen Teil seiner Stirnbohrung 29 einen geschlossenen zylindrischen Bereich 40 am Hülsenfortsatz 24. Dieser kleine zylindrische Bereich 40 verhindert eine Spalteinwanderung der inneren Dichtlippe 28 beim Öffnen des Zentralventils.

Sobald der Schieber 30 mit seiner Stirnfläche 39 der inneren Dichtlippe 28 anliegt, ist das Zentralventil geschlossen und die Bewegung des Schiebers 30 wird durch den Bund 25 gestoppt. Damit kann keine Bremsflüssigkeit mehr über die Längsnuten 31, die Stirnbohrung 29, die Axialbohrung 23, die Querbohrung 22 sowie die Auslaßbohrung 21 zum Vorratsbehälter zurückgelangen. Jetzt kann im Arbeitsraum 12 der entsprechende Bremsdruck durch den Kolben 10 aufgebaut werden.

Beim Nachlassen des Bremsdruckes verschiebt sich der Kolben 10 nach rechts, wobei der Schieber 30 ebenfalls mitgeführt wird, da sein Bund 34 am Sprengring 33 anschlägt. Dabei muß beim Rückhub Bremsflüssigkeit aus dem Vorratsbehälter zurück in den Arbeitsraum 12 geholt werden, was im wesentlichen über das Zentralventil erfolgt. Sollte kurzzeitig beim Rückhub ein Vakuum im Arbeitsraum 12 auftreten, so ist die äußere Dichtlippe 27 der Manschette 26 so ausgebildet, daß sie durch den Ringspalt 52 am Scheibenumfang 51 "nachschnüffeln" kann. Hierdurch wird die Rückführung des Kolbens 10 nicht behindert.

Sollte während des Bremsvorganges an dem Dichtring 7 eine Leckage auftreten, so wird diese vorwiegend durch die vorlaufende Kante 41 der Führungsbuchse 8 von dem Kolben 10 abgestreift. Die restliche Bremsflüssigkeit welche dann noch weiter am Kolben 10 anhaftet, wird beim nächsten Anbremsen an der Kante 42 der Führungsbuchse 8 abgestreift. Zum Abführen dieser aus Leckagen stammenden Bremsflüssigkeit besitzt die Führungsbuchse 8 umfänglich angeordnete Kanäle 43, welche mit einem Abfluß 44 in Verbindung stehen. Auf diese Weise gelangt die sowohl von der Kante 41 wie auch von der Kante 42 abgestreifte Bremsflüssigkeit aus dem Gehäuse 1. In jedem Fall wird keine aus Leckagen stammende Bremsflüssigkeit von dem Deckel 9 abgestreift, da zwischen dem Deckel 9 und dem Kolben 10 der Ringraum 11 gebildet ist.

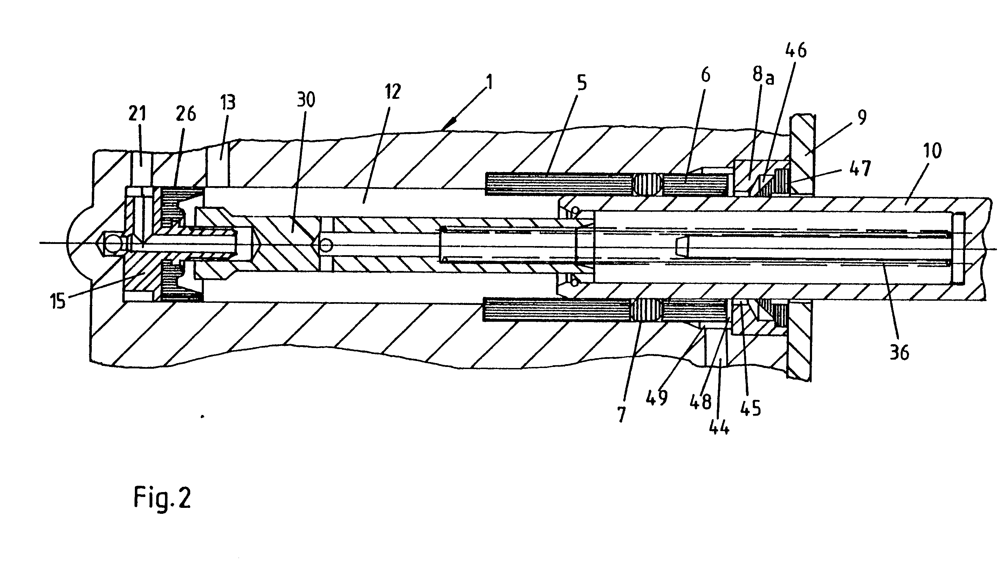

Das Ausführungsbeispiel des teilweise dargestellten Hauptbremszylinders nach Figur 2 ähnelt in wesentlichen Teilen demjenigen nach Figur 1, so daß auf eine weitere Beschreibung verzichtet wird. Lediglich im Bereich der Abstreiforgane für Leckagen am Kolben 10 sind Änderungen angebracht. Dabei umgibt die Buchse 8a den Kolben 10 unter Ausbildung eines Ringspaltes 45. In eine - schüsselförmige Buchsenerweiterung 46 ist ein elastischer Abstreifring 47 eingesetzt, welcher die gesamte aus Leckagen stammende Flüssigkeitsmenge bereits beim Rückhub des Kolbens 10 völlig abstreift. Diese abgestreifte Flüssigkeit fließt dann durch den Ringspalt 45, einen Spalt 48, einen Ringraum 49 zum Abfluß 44. Durch dieses Ausführungsbeispiel ist das Abstreifen verbessert, jedoch durch den Abstreifring 47 die Reibung am Kolben 10 geringfügig erhöht.

## Ansprüche

1. Bremsanlage, beispielsweise für Kraftfahrzeuge, mit einem Hauptbremszylinder aus einem Gehäuse und zumindest einer Gehäusebohrung, in welcher zumindest ein von einem Kolben veränderbarer Arbeitsraum ausgebildet ist, der einerseits mit Radbremszylindern od. dgl. und andererseits über ein beim Bremsdruckaufbau verschließbares Zentralventil mit einer Rückführleitung zu einem Vorratsbehälter für Bremsflüssigkeit in Verbindung steht, dadurch gekennzeichnet, daß das Zentralventil von einem jenseits des Kolbens (10) in der Gehäusebohrung (2) angeordneten Hülsenfortsatz (24) mit Axialbohrung (23) als Teil der Rückführleitung, einer diesen Hülsenfortsatz (24) umfangenden und mit einer äußeren Dichtlippe (27) der Innenwand (19) der Gehäusebohrung (2) anliegenden Manschette (15) sowie einer mit dem Hülsenfortsatz (24) zusammenwirkenden Stirnbohrung (29) in einer Stirnfläche (39) eines von der Bewegung des Kolbens (10) abhängenden Schiebers (30) gebildet ist.

2. Bremsanlage nach Anspruch 1, dadurch gekennzeichnet, daß der Hülsenfortsatz (24) in die Stirnbohrung (29) eingreift, wobei zwischen der Axialbohrung (23) und dem Arbeitsraum (12) eine Verbindung zwischen Hülsenfortsatz (24) und Innenwand der Stirnbohrung (29) besteht.

3. Bremsanlage nach Anspruch 2, dadurch gekennzeichnet, daß zur Verbindung zwischen Axialbohrung (23) und Arbeitsraum (12) auf dem Hülsenfortsatz (24) Längsnuten (31) vorgesehen sind.

4. Bremsanlage nach Anspruch 2, dadurch gekennzeichnet, daß der Hülsenfortsatz (24) zumindest im Bereich seines Eingriffs in die Stirnbohrung(29) querschnittlich als Drei- oder Vieleck ausgebildet ist.

5. Bremsanlage nach Anspruch 2, dadurch gekennzeichnet, daß der Hülsenfortsatz (24) zumindest eine von der Stirnbohrung (29) verschließbare Radialbohrung als Verbindung zwischen Arbeitsraum (12) und Axialbohrung (23) aufweist.

6. Bremsanlage nach wenigstens einem der Ansprüche 1 bis 5, dadurch gekennzeichnet, daß zum Verschließen des Zentralventils an der Manschette (26) eine innere Dichtlippe (28) herausgeformt ist, welche mit der Stirnfläche (39) des Schiebers (30) zusammenwirkt.

7. Bremsanlage nach Anspruch 6, dadurch gekennzeichnet, daß die innere Dichtlippe (28) einen dem Hülsenfortsatz (24) angeformten Bund (25) übergreift.

8. Bremsanlage nach Anspruch 7, dadurch gekennzeichnet, daß zwischen dem Beginn der Längsnuten (31), der Radialbohrung bzw. dem Bereich der querschnittlich drei- bzw. vieleckigen Form des Hülsenfortsatzes (24) und dem Bund (25) ein zylindrischer Bereich (40) des Hülsenfortsatzes (24) vorgesehen ist, dessen Außendurchmesser etwa dem Innendurchmesser der Stirnbohrung (29) entspricht.

9. Bremsanlage nach wenigstens einem der Ansprüche 1 bis 8, dadurch gekennzeichnet, daß dem Hülsenfortsatz (24) eine Scheibe (50) angeformt ist, welche mit ihrem Scheibenumfang (51) und der Innenwand (19) der Gehäusebohrung (2) zum Teil einen Ringkanal (20) ausbildet, der zwischen einer die Scheibe (50) radial durchziehenden und an die Axialbohrung (23) anschließenden Querbohrung (22) einerseits und einer im Gehäuse (1) vorgesehenen Auslaßbohrung (21) zu einem Vorratsbehälter andererseits angeordnet ist.

10. Bremsanlage nach Anspruch 9, dadurch gekennzeichnet, daß ein weiterer Teil des Scheibenumfanges (51) zwischen Ringkanal (20) und Manschette (26) bzw. deren äußeren Dichtlippe (27) einen Ringspalt (52) ausbildet, durch den die Dichtlippe (27) nachschnüffelt.

11. Bremsanlage nach Anspruch 9 oder 10, dadurch gekennzeichnet, daß der Scheibe (50) andererseits des Hülsenfortsatzes (24) eine Ringhülse (16) angeformt ist, welche über eine eingepreßte Kugel (18) in einer Sacklochbohrung (17) des Bodens (14) der Gehäusebohrung (2) festliegt.

12. Bremsanlage nach wenigstens einem der Ansprüche 1 bis 11, dadurch gekennzeichnet, daß der Schieber (30) andernends in eine Zylinderbohrung (32) des Kolbens (10) eingreift und dort über einen einen Bund (34) des Schiebers (30) hintergreifenden Sprengring (33) gesichert ist.

13. Bremsanlage nach Anspruch 12, dadurch gekennzeichnet, daß sich an dem Boden der Zylinderbohrung (32) eine Schraubenfeder (36) abstützt, welche in eine Längsbohrung (37) im Schieber (30) eingreift und dort auf eine Bohrungsschulter (38) trifft.

14. Bremsanlage nach wenigstens einem der Ansprüche 1 bis 13, dadurch gekennzeichnet, daß der Kolben (10) von einer Führungshülse (5) geführt und von einem Dichtring (7) abgedichtet ist.

15. Bremsanlage nach Anspruch 14, dadurch gekennzeichnet, daß nach dem Dichtring (7) ein Abstreifer vorgesehen ist.

16. Bremsanlage nach Anspruch 15, dadurch gekennzeichnet, daß der Abstreifer von einer weiteren Führungsbuchse (8) mit einer vorderen und einer hinteren Abstreifkante (41 bzw. 42) gebildet ist, wobei die Führungsbuchse (8) umfangseitige Kanäle (43) zum Ableiten der abgestreiften Bremsflüssigkeit zu einem Abfluß (44) aufweist.

17. Bremsanlage nach Anspruch 15, dadurch gekennzeichnet, daß als Abstreifer ein den Kolben (10) umfangender Abstreifring (47) vorgesehen ist.

18. Bremsanlage nach einem der Ansprüche 15 bis 17, dadurch gekennzeichnet, daß der Kolben (10) einen Deckel (9) durchsetzt, wobei zwischen Deckel (9) und Kolben (10) ein Ringraum (11) vorgesehen ist.

Fig.1

EP 0 293 623 A2

Fig.2

EP 0 293 623 A2